# EUROPÄISCHE PATENTSCHRIFT

(11) **EP 0 448 922 B1**
(45) Veröffentlichungstag und Bekanntmachung des Hinweises auf die Patenterteilung: **11.08.1993**
(21) Anmeldenummer: 90890085.5
(22) Anmeldetag: 26.03.1990
(51) Int. Cl.: F16L 17/025

(54) **Dichtungsring**
Sealing ring
Joint d'étanchéité

(43) Veröffentlichungstag der Anmeldung: 02.10.1991
(73) Patentinhaber: Dietzel Gesellschaft m.b.H., A-1111 Wien (AT)
(72) Erfinder: Pöcksteiner, Ernst, Dr., Dietzel GmbH, A-1111 Wien (AT); Hofmann, Oswald, Ing., Dietzel GmbH, A-1111 Wien (AT)
(74) Vertreter: Collin, Hans, Dipl.-Ing. Dr.

(56) Entgegenhaltungen:
- EP-A- 0 002 071
- AT-B- 366 210
- DE-C- 605 214
- GB-A- 1 083 451
- GB-A- 1 595 172
- US-A- 3 048 415
- US-A- 3 081 102
- US-A- 3 856 315

## Beschreibung

Die Erfindung betrifft Dichtanordnungen für Rohrverbindungen, insbesondere Steckverbindungen, vorzugsweise für Kunststoff- oder Metallrohre, bei denen das, vorteilhaft mit Ausnahme des angespitzten Endes mit zylindrischem Außenmantel ausgeführte, Ende des einen Rohres in das zu einer Verbindungsmuffe aufgeweitete Ende des anderen Rohres eingeschoben ist, wobei diese Aufweitung vom Muffenende beabstandet innen eine ringförmige Vertiefung unterschiedlicher Tiefe zur Aufnahme des Dichtungsringes aufweist, sowie diese Muffe neben der Vertiefung vorteilhaft mit zylindrischem Innenmantel ausgeführt ist und der Dichtungsring Bereiche unterschiedlicher Dicke besitzt, wobei in dessen muffenendseitigem Bereich ein verdickter Ringteil von insbesondere trapezförmigem Querschnitt vorgesehen ist und mit diesem verdickten Dichtungsringteil mindestens ein gegenüber diesem wesentlich dünnerer Dichtungsteil verbunden ist, und bei in die Muffe eingebrachtem Dichtungsring die muffenseitige Flanke des verdickten Dichtungsringteiles über die jeweils daran angrenzende Innenwand der muffenseitigen Flanke der Vertiefung des Muffenrohres hinaus nach innen vorgezogen ist.

Derzeit in Verwendung stehende Dichtungssysteme für Rohrverbindungen werden üblicherweise mit nur einer, maximal mit zwei Dichtlippen wie z.B. gemäß der US-A-3 856 315 ausgeführt. Durch das Spitzende des Rohres können beim Einschieben oder durch mitgebrachtes Kleinstgestein diese Dichtlippen sehr leicht verletzt und dadurch das gesamte Rohrsystem undicht werden, was insbesondere bei Abfluß- und Kanalleitungen wegen des Austritts von Fäkalabwasser und der daraus resultierenden Umweltbelastung bzw. Grundwasserverseuchung vermieden werden soll. Umgekehrt wird bei Kabelkanalanlagen aus Gründen der Sicherheit und einwandfreier Funktion gegen von außen eindringendes Wasser, z.B. Grundwasser, absolute Dichtheit gefordert. Diese wird auch mittels der leicht konischen Innenfläche des Dichtungsringes der Rohrverbindung nach der vorerwähnten US-A-3 856 315 nicht gewährleistet.

Demgemäß wurden bereits Dichtungsringe für Rohrverbindungen vorgeschlagen, die wie die Ausbildungen nach der AT-B-366 210, der AT-B-379 446, der GB-A-1 353 929 bzw. der DE-A-21 30 574, der GB-A-1 350 593 und der DE-A-20 10 826 drei oder mehr Dichtlippen aufweisen. Dabei fehlen jedoch ausreichende Vorkehrungen gegen das Eindringen von Fremdkörpern, z.B. Kleinstgestein, Sand od.dgl. beim Einschieben des Spitzendes des Rohres in die Muffe bzw. während des Betriebes. Eine Verletzung der Dichtung bzw. der Dichtlippen und ein Undichtwerden der Rohrverbindung ist daher auch dabei nicht zu vermeiden.

Die vorerwähnten Nachteile werden erfindungsgemäß weitestgehend vermieden, indem ausgehend von der einleitend klassifizierten Dichtanordnung der verdickte Dichtungsringteil und der Teil der ringförmigen Vertiefung des Muffenrohres mit größerer Tiefe einen Querschnitt mit einen steilen Winkel von 15° bis 25°, insbesondere von 20°, mit queraxialen Ebenen einschließenden Flanken aufweisen, und daß bei in die Muffe eingebrachtem Dichtungsring die muffenendseitige Flanke des verdickten Dichtungsringteiles über die jeweils daran angrenzende Innenwand der muffenendseitigen Flanke der Vertiefung des Muffenrohres und über die Innenwand des verdickten Dichtungsringteiles hinaus nach innen vorgezogen ist und daß sich an die zweite Flanke des verdickten Dichtungsringteiles im Mittel zur Rohrachse parallel verlaufende dünnere. Dichtungsringteile anschließen. Durch die über die Innenkante der benachbarten Flanke der Muffenvertiefung vorstehende Ringflanke und somit dadurch gebildete Abstreif- bzw. Reinigungslippe wird zunächst das Eindringen von Fremdkörpern weitestgehend verhindert; dennoch eingebrachte Fremdkörper werden in der in der Bewegungsrichtung des einzuschiebenden Spitzendes des Rohres hinter dieser Abstreif- bzw. Reinigungslippe vorhandenen, wegen der gegenüber dieser Lippe zurückspringenden Innenwand des verdickten Dichtungsringteiles gebildeten Schmutzkammer aufgefangen. Diese Effekte werden noch verstärkt, wenn an der Innenwand des verdickten Dichtungsringteiles, insbesondere an der Innenwandmitte, eine senkrecht zur Ringachse gerichtete ringförmige Verdickung vorgesehen ist. Der Abstreifeffekt bei gleichzeitiger sicherer Lagerung der Dichtung in ihrer Muffenvertiefung läßt sich verstärken, wenn die muffenendseitige Flanke des verdickten Dichtungsringteiles und die muffenendseitige Flanke des Muffenrohres mit größerer Tiefe einen Winkel im Bereich von 15 bis 25°, insbesondere von 20°, mit queraxialen Ebenen einschließen.

Um eine gute Einführung des Rohrspitzendes in die Muffe sicherzustellen, beträgt beispielsweise das Verhältnis der Dichtungsringlänge zum Rohrdurchmesser mindestens 0,2 : 1, maximal 0,8 : 1. Bedeutungsvoll ist auch eine günstig gewählte Shore-Härte des gesamten Dichtungsringes. Sie liegt zwischen 35 und 61 Shore A, wobei das Ringmaterial wie an sich bekannt bevorzugt aus Elastomeren, Copolymerisaten, aushärtendem bzw. thermoplastischem elastischen Kunststoff, Polyäthylen, beispielsweise Gummi besteht.

Eine besonders dichte Abdichtung läßt sich erreichen, wenn der mit dem verdickten Dichtungsringteil verbundene dünnere Dichtungsringteil einen annähernd achsparallel verlaufenden Streifen von wellenförmigem Querschnitt mit annähernd konstanter Stärke aufweist, wobei vorzugsweise mindestens zwei Wellen angeordnet sind, und zweckmäßig das Ende der letzten Querschnittswelle einwärts gerichtet ist, oder wenn der dünnere Dichtungsringteil zur Rohrachse weisend zwei oder mehrere ringförmige Dichtungsrippen aufweist, wobei zusätzlich zu den nach innen weisenden Dichtungsrippen versetzte, nach außen weisende ringförmige Dichtungsrippen vorhanden sein können. Dabei werden Dichtung und Führung besonders gefördert, wenn die Innendurchmesser der Innenrippen bzw. der einwärts gerichteten Wellen des dünneren Dichtungsringteiles annähernd gleich groß sind. Entsprechende Effekte können dadurch gesteigert werden, daß die Außendurchmesser der Außenrippen bzw. der auswärts gerichteten Wellen des dünneren Dichtungsringteiles annähernd gleich groß sind. Für den Dichtungserfolg kann es besonders günstig sein, wenn der Innendurchmesser des dünneren Dichtungsringteiles bzw. von dessen Innenrippen bzw. von dessen einwärts gerichteten Wellen kleiner ist als der Innendurchmesser des verdickten Dichtungsringteiles, insbesondere von dessen muffenendseitiger Flanke und gegebenenfalls von dessen ringförmiger Verdickung an dessen Innenwandmitte, z.B. sich diese Innendurchmesser wie 10,5 : 10,9 verhalten, was beispielsweise bei einer Höhe des verdickten Dichtungsringteiles von 15,5 mm 105 : 109 mm beträgt.

Eine Einsparung an Dichtungsmaterial bzw. an Dichtungsgewicht läßt sich erreichen, wenn der verdickte Dichtungsringteil an der einwärts gerichteten Seite zwischen den Flanken und der ringförmigen Verdickung ausgehöhlt ist, wobei auch wichtig ist, daß sich dadurch eine Vergrößerung der Schmutzkammer hinter der Abstreiflippe ergibt.

Vorteilhaft beträgt das Verhältnis der Länge des Muffenendteiles (vor der Dichtung) zum Durchmesser des Rohrspitzendes 0,2 : 1, insbesondere 0,4 : 1, um eine gute Führung abzusichern.

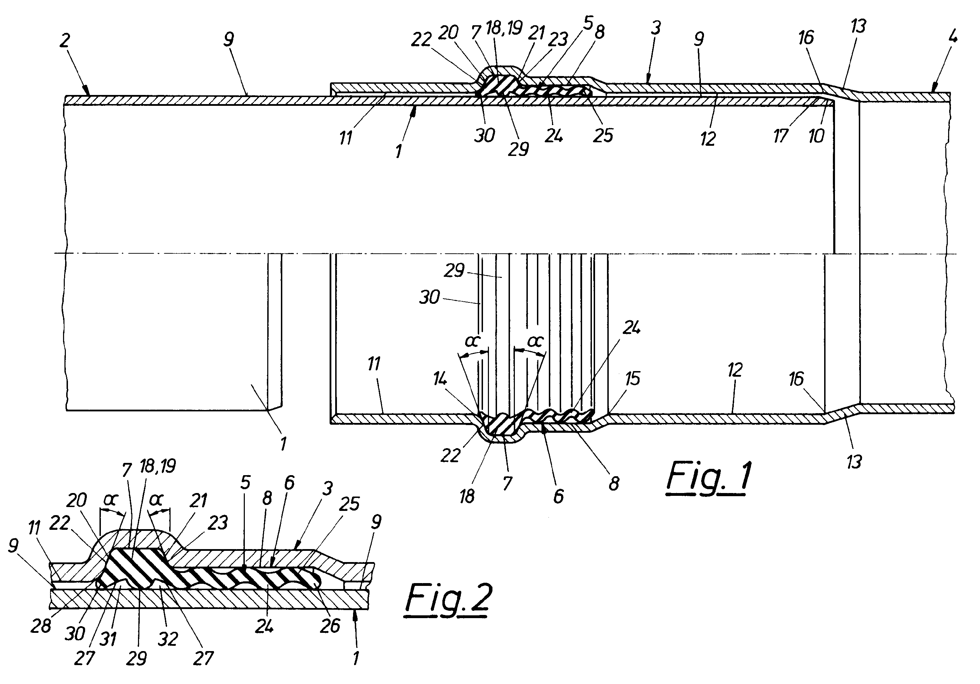

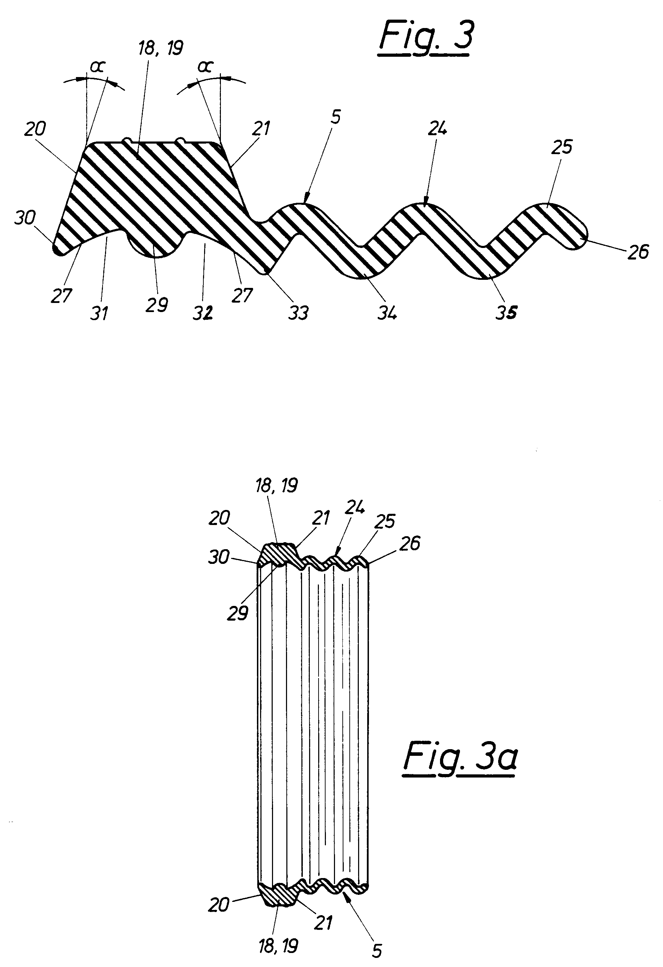

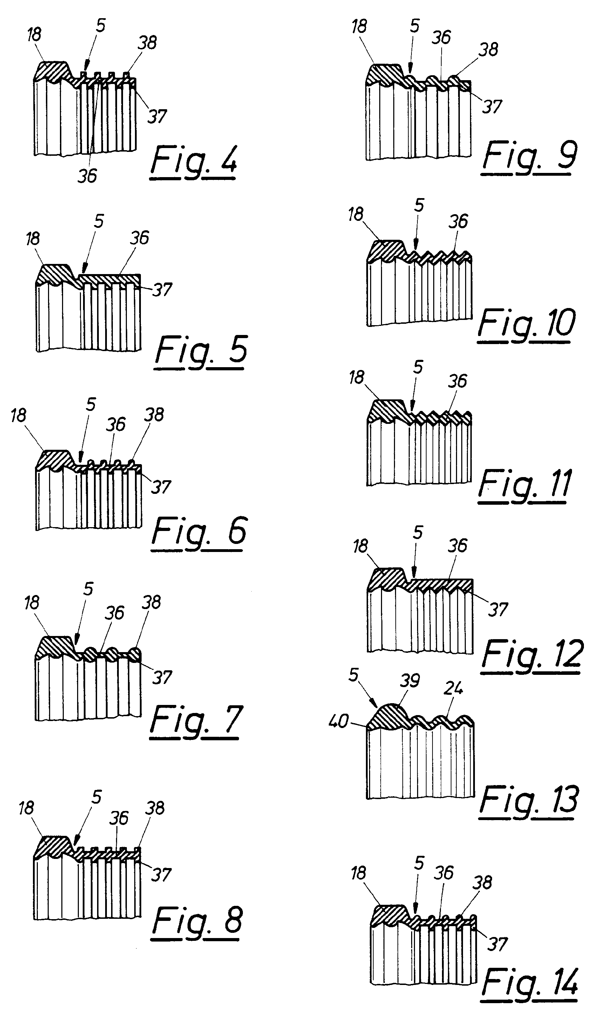

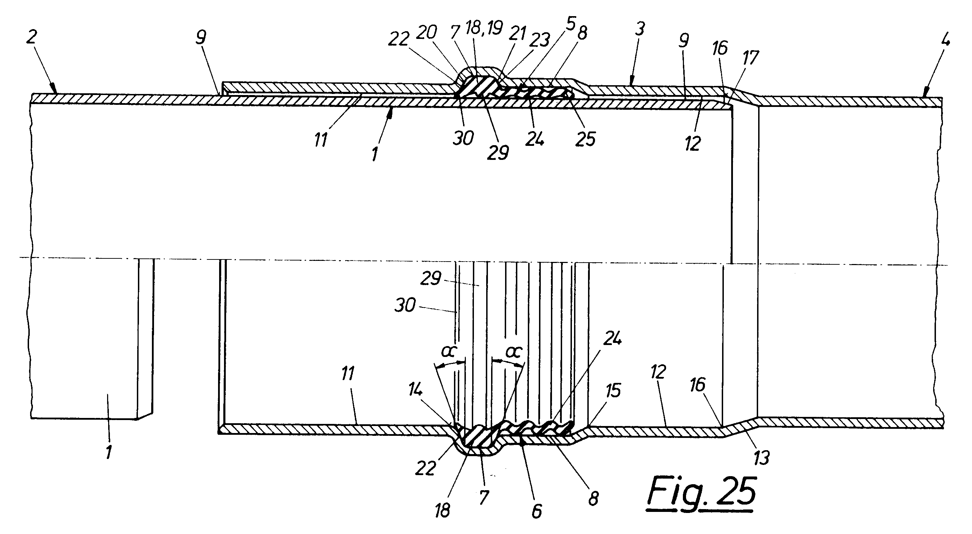

An Hand der Zeichnung werden Ausführungsbeispiele der Erfindung beschrieben. Dabei veranschaulichen Fig. 1 eine Rohrverbindung zum Teil im Axialschnitt, zum Teil in Ansicht, Fig. 2 ein Detail davon, u.zw. im Dichtbereich, im Schnitt, und die Fig. 3 bzw. 3a den Querschnitt des Dichtungsringes, die Schnitte gemäß den Fig. 2 und 3 in im Vergleich zur Darstellung nach Fig. 1 vergrößertem Maßstab. Die Fig. 4 bis 24 zeigen Teilaxialschnitte durch hier einsetzbare Dichtungsringe und Fig. 25 gibt eine weitere Ausbildung der Rohrverbindung zum Teil im Axialschnitt, zum Teil in Ansicht wieder, wobei der Muffenteil zwischen der Vertiefung für den Dichtungsring und dem Muffenende gegenüber der Ausführung nach Fig. 1 verlängert ist.

Im folgenden werden gleiche bzw. ähnliche bzw. ähnlich funktionierende Teile mit gleichen Bezugszeichen versehen. Die Rohrverbindung besteht gemäß den Fig. 1 und 2 sowie Fig. 25 aus dem Spitzende 1 des Rohres 2 und dem zur Muffe 3 aufgeweiteten Ende des Rohres 4. Für die Aufnahme des Dichtungsringes 5 besitzt die Muffe 3 im Abstand von ihrem Ende eine ringförmige Vertiefung 6. Diese Vertiefung 5 hat unterschiedliche Tiefen, wie bei 7 und 8 ersichtlich ist, wozu besonders auf Fig. 2 verwiesen wird. Die Rohre können aus Kunststoff, z.B. Polyvinylchlorid, Polyäthylen, Polypropylen, Plexiglas, Polymethacrylat, Polyphenylenoxid, Polyphenylenether bzw. Polykarbonat oder aus armiertem bzw. faser- bzw. glasfaserverstärktem Kunststoff bestehen. Es kommen dafür auch Metalle, z.B. Stahl, Gußeisen, legierter Stahl und auch Nichteisenmetalle, z.B. Aluminium und Kupfer in Frage. Auch Steinzeugrohre, Faser-, insbesondere Asbestzementrohre, und Betonrohre, armiert oder unarmiert, können die geschilderten Rohrverbindungen und Dichtungen erhalten. Die Dichtringe selbst können aus Elastomeren, die thermoplastisch bzw. aushärtend sein können, aus Gummi bzw. sonstigen elastischen Kunststoffen od.dgl. bestehen, wobei auch Copolymerisate, Polyäthylen u.dgl. in Frage kommen. Nicht nur Rohre mit glatten Mänteln, sondern auch profilierte Rohre, insbesondere Wellrohre, können mit den beschriebenen Rohrverbindungen versehen werden.

Der Außenmantel 9 des Rohres 2 ist mit Ausnahme seines angespitzten Endes 10 durchlaufend zylindrisch ausgebildet. Die Muffe 3 besitzt in den neben der Vertiefung 6 befindlichen Teilen 11 und 12 mit Ausnahme des Muffenhalses 13 einen zylindrischen Innenmantel, der in diesen Teilen 11 und 12 gleichen Durchmesser bzw. gleiche innere Weite hat. Zwischen dem vorerwähnten Außenmantel 9 und den Innenmantelteilen 11 und 12 ist ein Spiel vorhanden, das vom Muffenende bis zum muffenendseitigen Beginn 14 der Vertiefung 6 und vom muffenendfernen Ende 15 der Vertiefung 6 bis zum Beginn 16 der Einschnürung des Muffenhalses 13 bzw. bis zum Beginn 17 des angespitzten Endes 10 des eingeführten Rohres 2 bei Übereinstimmung der Rohr- und der Muffenachse gleich groß ist. Somit kann z.B. der Außendurchmesser des eingeführten Rohres 2 - zumindest im Bereich der Rohrverbindung - 110 mm und der Innendurchmesser der Muffe in den Bereichen 11 und 12 111 mm betragen. Dieses Spiel bzw. der Abstand zwischen Muffeninnenmantel und Außenmantel des eingeschobenen Rohres im Verbindungsbereich sind selbst dann vorhanden, wenn extreme Fertigungs- bzw. Herstellungstoleranzen zustandekommen bzw. zulässig sind, also der Kleinste Durchmesser des Muffeninnenmantels und der größte Außendurchmesser des eingeschobenen Rohres bei der Herstellung der vorerwähnten Teile einer Rohrverbindung zusammentreffen bzw. vorhanden sind. Die Böden der Vertiefung 6, d.h. hier der Vertiefungsteile 7 und 8 sind hier ebenfalls zylindrisch ausgebildet und haben beispielsweise Durchmesser von 115 mm im Bereich 8 und von 124,5 mm im Bereich 7. Diese Böden können unter Umständen auch konkav oder konvex (im Querschnitt gesehen) ausgebildet sein.

Allgemein wird zwischen dem Außendurchmesser des eingeführten Rohrendes 1,2 und dem Innendurchmesser der Muffenteile 11,12 ein Verhältnis von etwa bzw. genau 110 : 111 bzw. 11,0 : 11,1 bevorzugt.

Der Dichtungsring 5 besitzt einen verdickten Teil 18 mit einem Querschnitt 19 mit steilen Flanken 20,21, hier mit etwa trapezförmigem Querschnitt (Fig. 2,3!). Der Teil 7 der Muffenvertiefung 6 hat ebenfalls steile Flanken 22,23 und ebenfalls trapezförmigen Querschnitt, wobei die Form des Dichtungsringes und die Form dieser Vertiefung im Bereich der Dichtungsringverdickung 18 einander unter Berücksichtigung der im Betrieb zustandekommenden Verformung angepaßt sind.

Mit dem verdickten Teil 18,19 des Dichtungsringes 5 ist ein gegenüber diesem dünnerer Dichtungsringteil 24 in Form eines im Mittel etwa achsparallel verlaufenden bzw. etwa zylindrischen Mantels mit wellenförmigen Querschnitt verbunden. Der Querschnitt dieser Wellen besitzt annähernd konstante Stärke bzw. Dicke. Hier sind drei Wellen vorgesehen, wobei die vom verdickten Ringteil 18,19 am weitesten entfernte Welle 25 mit einem nach innen gerichteten Ast 25 endet (Fig. 2,3,3a!).

Wie besonders aus den Fig. 2 und 3 ersichtlich, ist die muffenendseitige Flanke 20,22 des verdickten Dichtungsteiles 18,19 bzw. der diesen aufnehmenden Vertiefung 7 länger ausgebildet als die daran angrenzende Innenwand 27 dieses Dichtungsringteiles bzw. als die Flanke 21, an welche der dünnere etwa achsparallel verlaufende Dichtungsteil 24 angeschlossen ist. Damit wird ermöglicht, daß auch nach dem Einbau des Dichtungsringes 5 in die hiefür vorgesehene Muffenvertiefung 5 bzw. Muffenaufweitung bzw. nach Herstellung der Rohrverbindung die muffenendseitige Flanke 20 des verdickten Dichtungsringteiles 18,19 nicht nur über die Innenwand 27 dieses Dichtungsringteiles sondern auch über die Innenkante 23 der benachbarten Flanke 22 der sie aufnehmenden Muffenvertiefung nach innen bzw. in Richtung der Ring- bzw. Rohr- bzw. Muffenachse bei 30 vorspringt (Fig. 2,3!). Außerdem ist zur weiteren Abdichtung im Zentrum des verdickten trapezförmigen Dichtungsteils 18,19 eine ringförmige Verdickung 29 vorgesehen.

Die Flanken 20,21 des verdickten Dichtungsringteiles 18,19 bzw. die Flanken 22,23 des Teils 7 der Vertiefung 6 mit größerer Tiefe bzw. die Flanken der trapezförmigen Querschnitte schließen einen Winkel α von etwa 20° mit queraxialen Ebenen ein (Fig. 2,3!). Es sind Winkel α zwischen 15° und 25° denkbar.

Wie der Fig. 1 zu entnehmen ist, befindet sich mit Vorteil die Vertiefung 6 für den Dichtungsring 5 näher dem Muffenende, u.zw. hier in einem Abstand von etwa 50 mm vom Muffenende, und in einem größeren Abstand, hier von etwa 80 mm, vom Muffenhals 13.

Die dargestellte Ausführung des Dichtungsringes in Verbindung mit deren Anordnung in der Rohrmuffe bzw. mit der ersichtlichen Rohrverbindung ergibt eine besonders gute Abdichtung im Bereich der Rohrverbindung. Dies gilt für die verschiedensten durch die Rohre zu führenden bzw. zu transportierenden Medien, also sowohl für Flüssigkeiten, insbesondere Wasser, als auch Gase, insbesondere Luft, auch für Unterdruck- bzw. Vakuumleitungen; dabei kann es sich um Zuleitungs- oder Abflußrohre, Kanäle bzw. Leitungen für Chemikalien bzw. Fäkalien handeln. Man kann praktisch absolute bzw. zumindest weitestgehend absolute Dichtheit im Bereich der Rohrverbindung erreichen.

Wie aus der oben beschriebenen Darstellung ersichtlich, besteht das hier vorliegende multifunktionelle ringförmige Dichtelement 5 aus einer Abstreiflippe bzw. Reinigungslippe 30, einer ersten Schutzkammer 31 (Fig. 3!), einer bereits oben erwähnten Stütz- und Dichtlippe 29, einer zweiten Schmutzkammer 32 sowie vier weiteren Dichtlippen 33,34,35 und 26. Durch die spezifische Ausbildung des Dichtelementes 5 mit steilen trapezförmigen Flanken 20,21 im ersten Drittel - wobei die Flanke 20 verlängert ist und damit zu einer Reinigungslippe 30 wird - wird dieses Dichtelement in einer entsprechend ausgeformten Muffenvertiefung 6 praktisch unverrückbar festgehalten, zumal im Bereich der Flanken ein beachtlicher Reibungsschluß vorliegt. Die Wellen bzw. Rippen 33,34 und 35 haben hier etwa den gleichen Innendurchmesser. Alle dargestellten Wellen haben hier auch etwa den gleichen Außendurchmesser.

Das einzuführende Rohr 2 bzw. dessen Spitzende 1 wird zunächst durch die Reinigungslippe 30 von anhaftendem Schmutz wie z.B. Erdreich, Sand bzw. Kleingestein gereinigt. Der abgestreifte Schmutz wird dabei vor der Reinigungslippe 30 im Bereich der vorderen Flanke 20 in dem durch das Spiel zwischen dem Außenmantel 9 des Rohres 2 und dem Innenmantel 11 der Muffe 3 gebildeten Hohlraum aufgenommen. Beim weiteren Einschieben des Rohres 2 drückt das Spitzende 1 über den im Mittelbereich des trapezförmigen ersten Drittels des Dichtelementes 5 angeordneten Dicht- und Stützring 29 diesen bzw. den verdickten Dichtungsringteil 18,19 in die vorgesehene Ausnehmung 6,7,8 in der Muffe 3 bzw. insbesondere gegen die trapezförmigen Flanken 22,23 (Flankenwinkel α zwischen 15° und 25°) in der Muffe 3. Dadurch wird ein Ausschieben wie bei bisherigen Systemen praktisch unmöglich und ein Einkleben ist daher nicht erforderlich.

Um eine konzentrische Einführung des Rohres 2 bzw. dessen Spitzendes 1 in das Dichtelement bzw. den Dichtungsring 5 zu erreichen und die sonst immer wieder auftretenden Verletzungen der Dichtung bei zu kurzer Rohrführung zu vermeiden, wird hier die Rohrmuffe im Bereich vor dem Dichtelement als sogenannte Langmuffe (Führungslänge 1) ausgeführt, wobei das Verhältnis Rohraußendurchmesser d zu Führungslänge 1 beispielsweise 0,2, insbesondere mindestens 0,4 und maximal 1,0 betragen kann.

Setzt man die Montage der Rohrverbindung fort, so erreicht in der Folge das eingeführte Rohr die zweite Dichtlippe 33 - gegebenenfalls noch anhaftender Schmutz lagert sich vor dieser in der zweiten Schmutzkammer 32 ab - und verstreckt den mit drei weiteren Dichtlippen ausgestatteten und wellenförmig ausgebildeten Teil 24 des Dichtelementes in axialer Richtung zum Muffenhals 13 hin, wodurch die weiteren Dichtlippen an das Rohr 2 gepreßt werden.

Diese spezifische Ausführung des multifunktionellen Dichtelementes bzw. Dichtungsringes 5 erlaubt es, zwischen Rohraußen- und Muffeninnendurchmesser ein größeres Spiel als sonst üblich vorzusehen, wodurch eventuelle Erzeugungstoleranzen problemlos überbrückt und auch die Vorspannung des Dichtelementes gegenüber dem einzuführenden Rohr 2 verringert werden können, so daß die Montage einfach und leicht ohne Zuhilfenahme von Werkzeugen oder Vorrichtungen von Hand aus möglich ist. Außerdem kann demnach die Muffenführung durchgehend im gesamten Muffenbereich zylindrisch ausgeführt werden, wodurch Fertigung und Werkzeugherstellung wesentlich vereinfacht und kostengünstiger werden. Darüber hinaus ermöglichen die breite bzw. lange Ausführung der Dichtung in Kombination mit dem größeren Spiel sowie die zahlreichen, hier insgesamt fünf Dichtlippen eine größere Beweglichkeit der Muffenverbindung trotz optimaler Dichtheit, was insbesonders bei in der Praxis unvermeidbaren Versetzungen der Mittelachsen der zu verbindenden Rohre durch Niveauunterschiede der Rohrgrabensohle bzw. bei je nach Werkstoff eventuell möglichen kurvigen Verlegungen von Vorteil ist. Um diesen Effekt im weitestgehenden Ausmaß zu erzielen, ist vorteilhaft das Verhältnis Rohrdurchmesser d zu Dichtelementlänge L mindestens 1 : 0,2, sollte aber aus wirtschaftlichen Gründen 1 : 0,8 nicht übersteigen. Eine weitere große Bedeutung kommt der Shore-Härte des Dichtelementes zu; sie soll zwischen einem Minimum 40 + 5 und einem Maximum 56 + 5 Shore A liegen.

Bei Druck-, Abfluß- und Kanalrohren, also Systemen mit Innendruck, wirkt dieser gegen den im Bereich des zweiten und dritten Drittels liegenden wellenförmigen Teil 24 des Dichtringes bzw. Dichtelementes 5 und drückt jenen in Richtung Muffenöffnung, wodurch eine direkte Beziehung Druck : Dichtheit eintritt; je höher der Druck, desto dichter die Rohrverbindung.

Ein von außen wirkender Druck durch Grundwasser, wie z.B. bei Kabelkanalsystemen, wirkt gegen die Reinigungslippe 30 und drückt diese gegen das Rohr in Richtung Muffenhals 13, wodurch sie wie die hier nachfolgenden weiteren fünf Dichtlippen 29,33,34,35 und 26 ebenfalls zur Dichtlippe wird und somit hier sechs Dichtlippen ein Eindringen von Grundwasser wirksam verhindern.

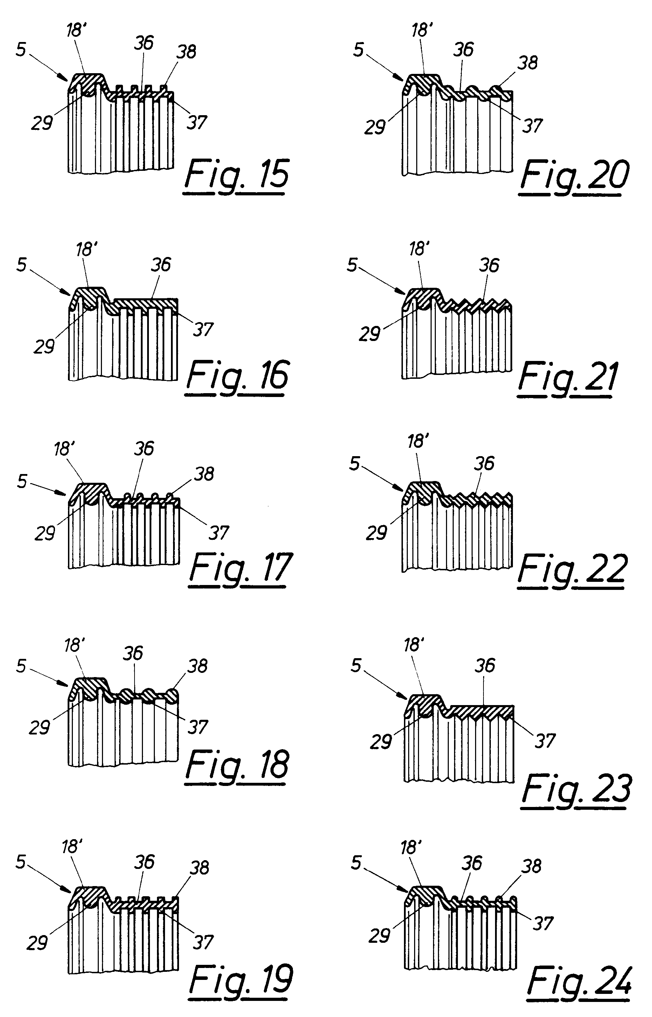

Die Fig. 4 bis 24 zeigen weitere Ausführungen von in die oben beschriebenen Rohrverbindungen einsetzbaren Dichtungsringen 5. Dabei sind für den dünneren Dichtungsteil zwar wieder achsparallele bzw. zylindrische Wände 36 vorgesehen, an denen innen Rippen 37 vorhanden sind (Fig. 5, Fig. 12, Fig. 16). An diesen Wänden können auch außen Rippen 38 vorgesehen sein (Fig. 4, Fig. 6, Fig. 7, Fig. 8, Fig. 9, Fig. 11, Fig. 14, Fig. 15, Fig. 17, Fig. 18, Fig. 19, Fig. 20, Fig. 22, Fig. 24), die gegenüber den Rippen 37 versetzt sein können (Fig. 4, Fig. 6, Fig. 9, Fig. 15, Fig. 17, Fig. 20). Beim Großteil dieser Dichtungsringe sind die verdickten Teile 18 mit etwa trapezförmigem Querschnitt geformt (Fig. 4 bis 12, Fig. 14 bis 24); dabei wurde als weitere Modifikation gemäß den Fig. 15 bis 24 der verdickte Dichtungsteil 18' mit etwa trapezförmigem Querschnitt an seiner Innenseite zwischen seinen Flanken und der hier wieder vorgesehenen ringförmigen Verdickung 29 ausgehöhlt, was die Elastizität bzw. das Gewicht des Dichtungsringes beeinflussen kann. Fig. 13 zeigt noch eine weitere Variante des Dichtungsringes mit einem verdickten Ringteil 39, dessen Querschnitt von der Trapezform abweicht; es handelt sich um einen etwa kreisförmigen Querschnitt mit einem Fortsatz 40, der wieder als Abstreif- bzw. Reinigungslippe dient. Diese Ausführung hat wieder einen dünneren Dichtungsteil 24 mit wellenförmigem Querschnitt. Statt der Wellen können gemäß den Fig. 10 und 21 auch kantige Ausbildungen mit zickzackförmigem Querschnitt vorgesehen werden. Die vorerwähnten Rippen können rechteckigen, dreieckigen oder halbkreisförmigen Querschnitt besitzen. Die am dünnwandigen Dichtungsteil bzw. an dessen Wand 36 vorgesehenen Innenrippen 37 besitzen vorteilhaft den gleichen Innendurchmesser. Gleiches gilt für die Wellen. Die außen an der Wand vorgesehenen Rippen 38 weisen zweckmäßig den gleichen Außendurchmesser auf.

Fig. 25 zeigt ein weiteres Ausführungsbeispiel der Erfindung. Diese Ausbildung gleicht im wesentlichen der nach den Fig. 1 bis 3, wobei allerdings die Muffenaufweitung 6 für den Dichtungsring 5 und dieser selbst einen größeren Abstand vom Muffenende besitzt, so daß eine zusätzlich verbesserte Führung des Spitzendes 1 beim Einbringen des Rohres 4 in die Muffe 3 bzw. Dichtung 5 erreichbar ist. Vorteilhaft beträgt im allgemeinen das Verhältnis der Länge des Muffenendteiles vor der Dichtung zum Durchmesser des Rohrspitzendes 0,2 : 1, insbesondere mindestens 0,4 : 1. Zwischen Rohraußenmantel 9 und den Muffeninnenmantelteilen 11,12 ist wieder ein gleich großes Spiel im Rohrverbindungsbereich vorgesehen, wobei sich naturgemäß im Bereich der Dichtung 5 durch die hiefür vorhandene Muffenaufweitung 6 ein wesentlich vergrößertes Spiel ergibt. Wie bereits erwähnt, ist das Verhältnis der Dichtungsringlänge zum Rohraußendurchmesser maximal 0,8 : 1, mindestens 0,2 : 1.

## Patentansprüche

1. Dichtanordnung für Rohrverbindungen, insbesondere Steckverbindungen, vorzugsweise für Kunststoff- oder Metallrohre, bei denen das, vorteilhaft mit Ausnahme des angespitzten Endes mit zylindrischem Außenmantel ausgeführte, Ende des einen Rohres in das zu einer Verbindungsmuffe aufgeweitete Ende des anderen Rohres eingeschoben ist, wobei diese Aufweitung vom Muffenende beabstandet innen eine ringförmige Vertiefung unterschiedlicher Tiefe zur Aufnahme eines Dichtungsringes aufweist, sowie diese Muffe neben der Vertiefung vorteilhaft mit zylindrischem Innenmantel ausgeführt ist und der Dichtungsring Bereiche unterschiedlicher Dicke besitzt, wobei in dessen muffenendseitigem Bereich ein verdickter Ringteil von insbesondere trapezförmigem Querschnitt vorgesehen ist und mit diesem verdickten Dichtungsringteil mindestens ein gegenüber diesem wesentlich dünnerer Dichtungsteil verbunden ist, und bei in die Muffe eingebrachtem Dichtungsring die muffenendseitige Flanke (20) des verdickten Dichtungsringteiles (18) über die jeweils daran angrenzende Innenwand der muffenendseitigen Flanke (22) der Vertiefung (7) des Muffenrohres (3) hinaus nach innen vorgezogen ist, dadurch gekennzeichnet, daß der verdickte Dichtungsringteil (18) und der Teil der ringförmigen Vertiefung (6) des Muffenrohres mit größerer Tiefe (7) einen Querschnitt mit einen steilen Winkel von 15° bis 25°, insbesondere von 20°, mit queraxialen Ebenen einschließenden Flanken (20,21; 22,23) aufweisen, und daß die muffenendseitige Flanke des verdickten Dichtungsringteiles über die Innenwand (27) des verdickten Dichtungsringteiles hinaus nach innen vorgezogen ist und daß sich an die zweite Flanke (21) des verdickten Dichtungsringteiles im Mittel zur Rohrachse parallel verlaufende dünnere Dichtungsringteile (24) anschließen.

2. Dichtanordnung nach Anspruch 1, dadurch gekennzeichnet, daß an der Innenwand des verdickten Dichtungsringteiles (18), insbesondere an der Innenwandmitte, eine senkrecht zur Ringachse gerichtete ringförmige Verdickung (29) vorgesehen ist.

3. Dichtanordnung nach Anspruch 1 oder 2, dadurch gekennzeichnet, daß die Shore-Härte des gesamten Dichtungsringes zwischen 35 und 61 Shore A beträgt, wobei das Ringmaterial wie an sich bekannt bevorzugt aus Elastomeren, Copolymerisaten, aushärtendem bzw. thermoplastischem elastischem Kunststoff, Polyäthylen, beispielsweise Gummi besteht.

4. Dichtanordnung nach einem der Ansprüche 1 bis 3, dadurch gekennzeichnet, daß der mit dem verdickten Dichtungsringteil (18) verbundene dünnere Dichtungsteil (24) einen annähernd achsparallel verlaufenden Streifen von wellenförmigem Querschnitt mit annähernd konstanter Stärke aufweist, wobei vorzugsweise mindestens zwei Wellen angeordnet sind, und zweckmäßig das Ende (26) der letzten Querschnittswelle (25) einwärts gerichtet ist.

5. Dichtanordnung nach einem der Ansprüche 1 bis 4, dadurch gekennzeichnet, daß der dünnere Dichtungsringteil (36) zur Rohrachse weisend zwei oder mehrere ringförmige Dichtungsrippen (37) aufweist, wobei bevorzugt zusätzlich zu den nach innen weisenden Dichtungsrippen (37) versetzte, nach außen weisende ringförmige Dichtungsrippen (38) vorhanden sind.

6. Dichtanordnung nach Anspruch 4 oder 5, dadurch gekennzeichnet, daß die Innendurchmesser der Innenrippen (33,34,35,37) bzw. der einwärts gerichteten Wellen des dünneren Dichtungsringteils (24,36) annähernd gleich groß sind.

7. Dichtanordnung nach einem der Ansprüche 4 bis 6, dadurch gekennzeichnet, daß die Außendurchmesser der Außenrippen (25,38) bzw. der auswärts gerichteten Wellen des dünneren Dichtungsringteils (24,36) annähernd gleich groß sind.

8. Dichtanordnung nach einem der Ansprüche 4 bis 7, dadurch gekennzeichnet, daß der Innendurchmesser des dünneren Dichtungsringteiles (24,36) bzw. von dessen Innenrippen bzw. von dessen einwärts gerichteten Wellen kleiner ist als der Innendurchmesser des verdickten Dichtungsringteiles (18), insbesondere von dessen muffenendseitiger Flanke und/oder von dessen ringförmiger Verdickung an dessen Innenwandmitte, z.B. sich diese Innendurchmesser wie 10,5 : 10,9 verhalten, was beispielsweise bei einer Höhe des verdickten Dichtungsringteiles (18) von 15,5 mm 105 : 109 mm beträgt.

9. Dichtanordnung nach einem der Ansprüche 1 bis 8, dadurch gekennzeichnet, daß der verdickte Dichtungsringteil (18) an der einwärts gerichteten Seite zwischen den Flanken (20,21) und der ringförmigen Verdickung (29) ausgehöhlt ist.

## Claims

1. A sealing arrangement for pipe couplings, in particular insertion-type couplings, preferably for pipes of plastics material or metal, wherein the end of the one pipe, except for the tapered end preferably having a cylindrical external surface, is inserted into the end of the other pipe, expanded to a coupling sleeve, this expanded portion having an internal annular groove of varying depth for receiving a sealing ring, which groove is spaced from the sleeve end, and this sleeve beside the groove preferably being provided with a cylindrical internal surface and the sealing ring having regions of different thickness, a thickened ring portion of in particular trapezoidal cross-section being provided in its sleeve end-side region, and at least one sealing portion substantially thinner with respect thereto being connected to this thickened sealing ring portion, and the sleeve end-side flank (20) of the thickened sealing ring portion (18) protruding beyond the interior wall adjacent thereto in each case of the sleeve end-side flank (22) of the groove (7) of the sleeve pipe (3) towards the interior, when the sealing ring is introduced into the sleeve, characterized in that the thickened sealing ring portion (18) and that portion of the annular groove (6) of the sleeve pipe having the larger depth (7) have a cross-section having flanks (20,21;22,23) forming an acute angle of 15° to 25°, in particular 20°, with planes transverse to the axis, and in that the sleeve end-side flank of the thickened sealing ring portion protrudes beyond the interior wall (27) of the thickened sealing ring portion towards the interior, and in that thinner sealing ring portions (24), on average running parallel to the axis of the pipe, adjoin the second flank (21) of the tickened sealing ring portion.

2. The sealing arrangement according to claim 1, characterized in that an annular enlargement (29) extending perpendicular to the axis of the ring is provided at the interior wall of the thickened sealing ring portion (18), in particular at the center of the interior wall.

3. The sealing arrangement according to claim 1 or claim 2, characterized in that the Shore hardness of the complete sealing ring ranges between 35 and 61 Shore A, the material as per se known preferably being composed of elastomers, copolymers, age hardening and thermoplastic elastic plastics, respectively, polyethylene, e.g. rubber.

4. The sealing arrangement according to any of claims 1 to 3, characterized in that the thinner sealing portion (24) connected to the thickened sealing ring portion (18) comprises a strip running approximately parallel to the axis and having an undulating cross-section of approximately constant thickness, wherein preferably at least two undulations are arranged and conveniently the end (26) of the last cross sectional undulation (25) is directed inwards.

5. The sealing arrangement according to any of claims 1 to 4, characterized in that the thinner sealing ring portion (36) is provided with two or several annular sealing ribs (37) pointing to the axis of the pipe, there preferably in addition being provided outward pointing annular sealing ribs (38), staggered relatively to the inward pointing sealing ribs (37).

6. The sealing arrangement according to claim 4 or claim 5, characterized in that the inner diameters of the interior ribs (33,34,35,37) and the inward facing undulations of the thinner sealing ring portion (24,36), respectively, are of approximately the same size.

7. The sealing arrangement according to any of claims 4 to 6, characterized in that the outer diameters of the outer ribs (25,38) and of the outward facing undulations of the thinner sealing ring portion (24,36), respectively, are of approximately the same size.

8. The sealing arrangement according to any of claims 4 to 7, characterized in that the inner diameter of the thinner sealing ring portion (24,36), of its inner ribs and of its inward facing undulations, respectively, is smaller than the inner diameter of the thickened sealing ring portion (18), in particular of its sleeve end-side flank and/or of its annular enlargement at the center of its interior wall, e.g. the ratio of these inner diameters is 10.5 : 10.9, which, for example, in the case of a height of the thickened sealing ring portion (18) of 15.5 mm amounts to 105 : 109 mm.

9. The sealing arrangement according to any of claims 1 to 8, characterized in that the thickened sealing ring portion (18) is hollow at the inward facing side between the flanks (20,21) and the annular enlargement (29).

## Revendications

1. Système d'étanchement pour des raccords de tuyaux, en particulier du type enfichage, préférablement pour des tuyaux plastiques ou métalliques, dans lesquels l'extrémité de l'un des tuyaux, qui, à l'exception de l'extrémité appointue, avantageusement a une surface extérieure cylindrique, est introduite dans l'extrémité de l'autre tuyau, évasée pour former un manchon de jonction, cette partie évasée ayant à l'intérieur, à une distance de l'extrémité du manchon, une gorge annulaire de profondeur variable pour la réception d'un anneau d'étanchéité, et ce manchon à côté de la gorge préférablement ayant une surface intérieure cylindrique et l'anneau d'échantéité ayant des domaines d'épaisseur différente, une partie épaissie de l'anneau en particulier de section transversale trapézoidale étant prevue dans son domaine au côté de l'extrémité du manchon et au moins une partie de joint de beaucoup plus faible épaisseur que celle-là étant reliée avec cette partie épaissie de l'anneau d'étanchéité, et le flanc (20) au côté de l'extrémité du manchon de la partie épaissie (18) de l'anneau d'étanchéité étant avancé vers l'intérieur au-delà de la paroi adjacente respective du flanc (22) au côté de l'éxtrémité du manchon de la gorge (7) du tuyau de manchon (3) quand l'anneau d'étanchéité est introduit dans le manchon, caractérisé en ce que la partie épaissie (18) de l'anneau d'étanchéité et cette partie de la gorge annulaire (6) du tuyau de manchon ayant une plus grande profondeur (7) présentent une section transversale avec des flancs (20,21;22,23) formant un angle aigu de 15° à 25°, en particulier 20°, avec des plans transversaux relativement à l'axe, et en ce que le flanc au côté de l'extrémité du manchon de la portion épaissie de l'anneau d'étanchéité est avancé vers l'intérieur au-delà de la paroi intérieure (27) de la partie épaissie de l'anneau d'étanchéité, et en ce que des parties (24) de plus faible épaisseur de l'anneau d'étanchéité, en moyenne étant parallèle à l'axe du tuyau, se joignent au deuxième flanc (21) de la partie épaissie de l'anneau d'étanchéité.

2. Système d'étanchement selon la revendication 1, caractérisé en ce qu'un épaississement (29) s'étendant perpendiculairement à l'axe de l'anneau est pourvu à la paroi intérieure de la partie épaissie (18) de l'anneau d'étanchéité, en particulier au centre de la paroi intérieure.

3. Système d'étanchement selon la revendication 1 ou la revendication 2, caractérisé en ce que la dureté Shore de tout l'anneau d'étanchéité est entre 35 et 61 Shore A, la matière de l'anneau comme connue en soi préférablement consistant en élastomères, copolymères, matière synthétique élastique respectivement thermodurcissable et thermoplastique, polyéthylène, par exemple en caoutchouc.

4. Sytème d'étanchement selon l'une des revendications 1 à 3, caractérisé en ce que la partie de joint (24) de plus faible épaisseur, reliée à la partie épaissie (18) de l'anneau d'étanchéité, présente une bande de section transversale ondulée d'une épaisseur approximativement constante, ayant un cours approximativement parallèle à l'axe, préférablement au moins deux ondulations étant arrangées et appropriément l'extrémité (26) de la dernière ondulation en section transversale (25) étant dirigée vers l'intérieur.

5. Système d'étanchement selon l'une des revendications 1 à 4, caractérisé en ce que la partie (36) de plus faible épaisseur de l'anneau d'étanchéité est pourvue de deux ou plusieurs nervures d'étanchéité annulaires (37), dirigées vers l'axe du tuyau, des nervures d'étanchéité (38) dirigées vers l'extérieur et désaxées relativement aux nervures d'étanchéité (37) dirigées vers l'intérieur étant préférablement pourvues aussi.

6. Système d'étanchement selon la revendication 4 ou la revendication 5, caractérisé en ce que les diamètres intérieurs respectivement des nervures intérieures (33,34,35,37) et des ondulations, dirigées vers l'intérieur, de la partie (24,36) de plus faible épaisseur de l'anneau d'étanchéité sont approximativment égaux.

7. Système d'étanchement selon l'une des revendications 4 à 6, caractérisé en ce que les diamètres extérieurs respectivement des nervures extérieurs (25,38) et des ondulations, dirigées vers l'extérieur, de la partie (24,36) de plus faible épaisseur de l'anneau d'étanchéité sont approximativement égaux.

8. Système d'étanchement selon l'une des revendications 4 à 7, caractérisé en ce que le diamètre intérieur de la partie (24,36) de plus faible épaisseur de l'anneau d'étanchéité ou bien des nervures intérieurs de celle-ci ou bien des ondulations dirigées vers l'intérieur de celle-ci est inférieur au diamètre intérieur de la partie épaissie (18) de l'anneau d'étanchéité, en particulier de son flanc au côté de l'extrémité du manchon et/ou de son épaississement annualire au centre de sa paroi intérieure, par exemple le rapport entre ces diamètres intérieurs est 10,5 : 10,9, ce qui, par exemple, resulte en un rapport de 105 à 109 mm au cas d'une hauteur de la partie épaissie (18) de l'anneau d'étanchéité de 15,5 mm.

9. Système d'étanchement selon l'une des revendications 1 à 8, caractérisé en ce que la partie épaissie (18) de l'anneau d'étanchéité est creusée au côté dirigé vers l'intérieur entre les flancs (20,21) et l'épaississement annulaire (29).
